**Europäisches Patentamt**

**European Patent Office**

**Office européen des brevets**

(11) Veröffentlichungsnummer: **0 267 572**
**A2**

(12) # EUROPÄISCHE PATENTANMELDUNG

(21) Anmeldenummer: 87116541.1

(51) Int. Cl.4: **B23Q 5/56**

(22) Anmeldetag: 10.11.87

(30) Priorität: 14.11.86 DE 3638929

(43) Veröffentlichungstag der Anmeldung:
18.05.88 Patentblatt 88/20

(84) Benannte Vertragsstaaten:
DE FR GB IT

(71) Anmelder: **H. Wohlenberg KG, GmbH & Co.**
**Wohlenbergstrasse 6 - 8**
**D-3000 Hannover 1(DE)**

(72) Erfinder: **Strate Hans**
**Pepperfeld 19**
**D-3000 Hannover 91(DE)**

(74) Vertreter: **Thömen, Uwe, Dipl.-Ing.**
**Patentanwalt U. Thömen Zeppelinstrasse 5**
**D-3000 Hannover(DE)**

(54) **Spindelkasten für eine Drehmaschine.**

(57) Spindelkästen für Drehmaschinen umfassen ein Zahnradgetriebe, welches mindestens eine antreibbare Eingangswelle und zur Leistungsverzweigung zwei Ausgangswellen für den Antrieb einer mit einem Zahnkranz versehenen Planscheibe umfaßt. Die beiden Ausgangswellen besitzen ein erstes mit Zwischenzahnrädern einer Zwischenwelle im Eingriff befindliches Ritzelpaar zum Antrieb der Ausgangswellen sowie ein zweites im Eingriff mit dem Zahnkranz der Planscheibe befindliches Ritzelpaar. Bei solchen Spindelkästen ist der Antrieb nicht völlig spielfrei, was sich nachteilig auf die Bearbeitung von Werkstücken auswirkt.

Bei der Erfindung sind die beiden Ritzel des ersten Ritzelpaares gegenläufig schrägverzahnt ausgebildet, und zwar bei entsprechender Schrägverzahnung der im Eingriff befindlichen Zwischenzahnräder. Durch eine wahlweise axiale Verschiebung der die Zwischenzahnräder tragenden Zwischenwelle läßt sich der Antrieb des Spindelkastens spielfrei gestalten.

Fig. 1

## Spindelkasten für eine Drehmaschine

Die Erfindung betrifft einen Spindelkasten für eine Drehmaschine gemäß dem Oberbegriff des Patentanspruchs 1.

Mit Hilfe des Spindelkastens bzw. der Spindel wird bei einer Drehmaschine bekanntlich das zwischen der Planscheibe und einem Reitstock eingespannte Werkstück gedreht, um eine spanabhebende Formung des Werkstückes zu ermöglichen. Dabei kommt dem Spindelkasten übrigens nicht nur die Aufgabe zu, das Werkstück kontinuierlich umlaufend zu drehen, vielmehr dient der Spindelkasten daneben häufig auch für den Positionierbetrieb, um das Werkstück nicht nur laufend, sondern auch nur jeweils einmalig um einen gewünschten ganz bestimmten Winkel zu drehen und das Werkstück so in eine gewünschte Position zu bringen.

Der Spindelkasten gemäß dem Oberbegriff des Patentanspruchs 1 umfaßt ein Zahnradgetriebe, welches mindestens eine antreibbare Eingangswelle und zur Leistungsverzweigung zwei Ausgangswellen für den Antrieb der mit einem Zahnkranz versehenen Planscheibe besitzt. Sowohl bei der laufenden rotatorischen Drehung des Werkstückes als auch beim Positionierbetrieb wird für eine einwandfreie Bearbeitung des Werkstückes ein möglichst spielfreier Antrieb gefordert.

In der Praxis ist zu beobachten, daß die bekannten Spindelkästen diese Forderung insbesondere bei einer gewünschten außerordentlich genauen Bearbeitung des Werkstückes nicht hinreichend erfüllen. Vielmehr tritt der Nachteil auf, daß innerhalb des Antriebes ein gewisses Spiel vorhanden ist, weil die einzelnen Zahnräder nicht vollständig genau ineinandergreifen, sondern weil - wenn auch nur geringfügig - etwas Luft beim Eingriff der einzelnen Zähne ineinandergreifender Zahnräder verbleibt. Diesem Umstand kann auch nicht durch eine genaue Fertigung der Zahnräder hinreichend begegnet werden, denn gewisse Fertigungstoleranzen lassen sich nicht vollständig ausschließen.

Durch die DE-Zeitschrift "Metall" 1960, Heft 12, Seite 1291, Abb. 10, ist es zwar allgemein bekannt, bei einem Getriebe das Spiel dadurch auszuschalten, daß gegenläufige Schrägverzahnungen verwendet werden, wobei eine Verspannung zwischen den Zahnrädern erzeugt wird, um das Spiel zu minimieren. Allerdings stoßen solche Zahnräder mit doppelter Schrägverzahnung bei einem Spindelkasten mit Leistungsverzweigung auf Probleme, weil hier eine sehr hohe Leistungsübertragung gefordert und mit voller Leistung gefahren wird. Andererseits wird bei der Erfindung aber von einem Spindelkasten ausgegangen, welcher sowohl die Betriebsart mit der Leistungsverzweigung als auch den Positionierbetrieb ermöglichen soll.

Im übrigen setzt die an sich bekannte Leistungsverzweigung die Verwendung eines Ritzelpaares voraus, wobei die einzelnen Ritzel örtlich voneinander getrennt den Zahnkranz der Planscheibe gemeinsam antreiben. Mit der Leistungsverzweigung läßt sich somit zwar eine Verringerung der durch die einzelnen Ritzel vorzunehmenden Kraftübertragung erreichen, indem jedes Ritzel nur noch die Hälfte der Kraft auf den Zahnkranz zu übertragen braucht, allerdings führt die Verwendung zweier Ritzel zu der Gefahr einer Erhöhung des Spiels des Gesamtantriebs. Je mehr Zahnräder und Ritzel nämlich im Zusammenhang miteinander verwendet werden, um so größer wird das Spiel der Getriebeanordnung.

Beim Positionierbetrieb wirkt sich ein nicht spielfreier Antrieb besonders nachteilig aus, weil aufgrund des vorhandenen Spiels eine exakte Positionierung also eine genau vorgegebene Drehung des Werkstückes um einen bestimmten Winkel - nicht möglich ist. Der Erfindung leigt die Aufgabe zugrunde, bei einem Spindelkasten, der sowohl mit einer Leistungsverzweigung arbeitet als auch einen Positionierbetrieb ermöglicht, die nachteiligen Wirkungen des Spiels der Getriebeanordnung weitgehend zu vermeiden. Dieses Ziel erreicht die Erfindung bei dem im Oberbegriff des Anspruchs 1 genannten Spindelkasten durch die im kennzeichnenden Teil angegebenen Merkmale.

Durch die Erfindung wird in vorteilhafter Weise die Möglichkeit geschaffen, beim Positionierbetrieb durch axiale Verschiebung der die Zwischenzahnräder tragenden Zwischenwelle eine praktisch völlige Spielfreiheit zu erreichen, da durch die axiale Verschiebung der Zwischenwelle mit einer Verspannung gearbeitet wird. Dadurch sind sehr genaue Positionierbewegungen möglich.

Bei der Betriebsart der Leistungsverzweigung, wenn mit voller Leistung gefahren und eine umlaufende Drehbewegung erzeugt wird, kann die erwähnte Verspannung verringert oder aufgehoben werden, um bei der Leistungsverzweigung mit der sehr hohen Leistung ein gewisses, noch nicht - schädliches Spiel bewußt zuzulassen.

Mit der Erfindung ist es also möglich, zwischen den beiden extremen Betriebsarten der Leistungsverzweigung und dem Positionierbetrieb umzuschalten, wobei der Positionierbetrieb spielfrei ist und bei der Leistungsverzweigung ein gewisses Spiel zugelassen wird. Dies wird dadurch erreicht, daß die Verspannung wahlweise "eingestellt" oder "abgeschaltet" werden kann. Damit wird in neuartiger Weise ein Spindelkasten geschaffen, welcher die Eigenschaft hat, daß bei dem Zahnradgetriebe mit Leistungsverzweigung zur Erzielung und Übertragung einer hohen Leistung - welches zwangsläufig ein gewisses Spiel bedingt - der Positionierbetrieb gleichwohl spielfrei gestaltet werden kann. Obwohl der Spindelkasten mit einer Leistungsverzweigung arbeitet, läßt sich dennoch der Positionierbetrieb genau und spielfrei durchführen.

Wenn die Zwischenwelle in axialer Richtung mit einer Kraft beaufschlagt wird, überträgt sich diese Kraft in Folge der Schrägverzahnung auf den Eingriff der jeweiligen Ritzel bzw. Zahnräder in der Weise, daß die einzelnen Zähne der Ritzel bzw. Zahnräder während der Kraftübertragung längs ihrer jeweiligen Flanke bzw. Eingriffslinie fest miteinander in Berührung sind, so daß bei dem ersten Doppelritzelpaar in Verbindung mit den Zwischenrädern der Zwischenwelle kein Spiel mit Luft auftritt.

Dieser Effekt überträgt sich auch auf das zweite Ritzelpaar, dessen beide Ritzel mit dem Zahnkranz im Eingriff sind, d.h., auch hier tritt kein Spiel mit Luft auf. Da das erste Ritzelpaar gegenläufig schräg verzahnt ist, und in Folge der Möglichkeit der axialen Verschiebung der Zwischenwelle wird nämlich die Drehbewegung des einen Ritzels unterstützt, während die Drehbewegung des anderen Ritzels abgeschwächt wird. Dies führt zu dem Ergebnis, daß die betreffenden Ritzel des ersten Ritzelpaares jeweils in ständiger Berührung mit den Zähnen des zugehörigen Zwischenzahnräder abkämmen, und daß ferner auch die Ritzel des zweiten Ritzelpaares in ständiger Berührung mit den Zähnen des Zahnkranzes abkämmen und somit ein Spiel vermieden wird.

In zweckmäßiger Ausgestaltung der Erfindung ist die Zwischenwelle mit einer Hydraulikvorrichtung zum axialen Verschieben der Zwischenwelle verbunden, und ferner ist in vorteilhafter Weise vorgesehen, daß die Zwischenwelle unter ständiger Einwirkung einer wählbaren in axialer Richtung wirkenden Kraft gehalten werden kann. Dadurch ist eine Anpassung der zur Spielfreiheit führenden Verspannung an unterschiedliche Belastungen möglich.

Weitere zweckmäßige Ausgestaltungen der Erfindung sind in den Unteransprüchen angegeben und der Zeichnung und der nachfolgenden Beschreibung zu entnehmen. Im folgenden wird die Erfindung zum besseren Verständnis anhand des in der Zeichnung dargestellten Ausführungsbeispiels näher erläutert. Es zeigen:

Fig. 1 eine schematische Darstellung eines Spindelkastens,

Fig. 2 eine Frontansicht auf die Ritzel eines ersten Ritzelpaares und auf damit im Eingriff befindliche Zwischenzahnräder,

Fig. 3 eine Frontansicht eines zweiten Ritzelpaares, dessen einzelne Ritzel im Eingriff mit einem Zahnkranz stehen, und

Fig. 4 eine Darstellung zur Verdeutlichung des spielfreien Antriebes des Zahnkranzes durch das Ritzelpaar.

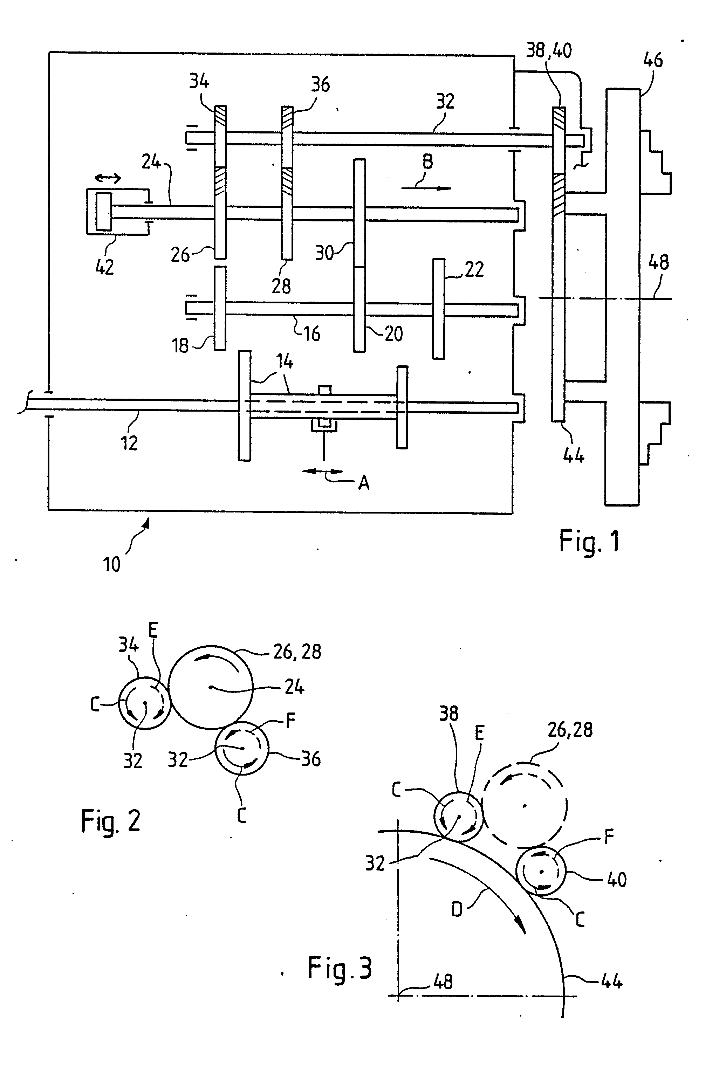

Der in Fig. 1 als Ganzes mit der Bezugsziffer 10 bezeichnete Spindelkasten umfaßt eine Eingangswelle 12 mit einem darauf verschiebbar-vergleiche Doppelpfeil A - angeordneten Schalt-Radsatz 14 für unterschiedliche Übersetzungen. Ferner besitzt der Spindelkasten 10 eine Übersetzungswelle 16 mit Zahnrädern 18, 20 und 22.

Die Übersetzungswelle 16 kann von der Eingangswelle 12 wahlweise über die beiden Zahnräder 18 bzw. 22 angetrieben werden, wobei die Umdrehung der Übersetzungswelle 16 durch das Zahnrad 20 im Eingriff mit einem Zahnrad 30 auf eine Zwischenwelle 24 übertragen wird.

Die Zwischenwelle 24 ist mit Zwischenzahnrädern 26 und 28 versehen, die im Eingriff mit zwei Ritzeln eines Ritzelpaares 34, 36 stehen. Jedes Ritzel 34, 36 ist auf einer eigenen Ausgangswelle 32 angeordnet. In der Darstellung gemäß Fig. 1 liegen diese beiden Ausgangswelle 32 in der Zeichenebene senkrecht hintereinander, so daß nur eine Ausgangswelle 32 sichtbar ist (Fig. 2 und 3 zeigen demgegenüber die beiden separaten Ausgangswellen 32). Das eine Ritzel befindet sich also auf der ersten Ausgangswelle 32, während das andere Ritzel 36 auf der zweiten Ausgangswelle 32 angeordnet ist.

Ferner tragen die beiden Ausgangswellen 32 an ihrem anderen Ende noch ein zweites Ritzelpaar mit den Ritzeln 38 und 40, die gemäß der Darstellung in Fig. 3 mit dem Zahnkranz 44 der Planscheibe 46 im Eingriff stehen. In der Darstellung gemäß Fig. 1 ist wiederum nur ein einzelnes Ritzel des zweiten Ritzelpaares 38, 40 zu erkennen, während das andere Ritzel senkrecht zur Zeichenebene dahinter befindlich angeordnet ist (Fig. 3 zeigt demgegenüber die beiden Ritzel 38 und 40 nebeneinander).

Die Ritzel des zweiten Ritzelpaares 38, 40 sind gleichverzahnt und im Eingriff mit dem Zahnkranz 44, durch welches die Planscheibe 46 angetrieben wird, die sich um die Hauptspindelachse 48 dreht, und die in an sich bekannter Weise mit Befestigungsmitteln zum Einspannen eines hier nicht dargestellten Werkstückes versehen ist.

Die beiden einzelnen Ritzel 34 und 36 des ersten Ritzelpaares sind gegenläufig - schrägverzahnt, bei jeweils entsprechender Schrägverzahnung der Zwischenzahnräder 26 und 28, während die Ritzel 38, 40 des zweiten Ritzelpaares (wie schon erwähnt) gleichverzahnt sind.

Die Zwischenwelle 24 ist mit einer Hydraulikvorrichtung 42 verbunden und axial bewegbar angeordnet. Durch den Pfeil B ist angedeutet, daß mittels der Hydraulikvorrichtung 42 wahlweise eine in axialer Richtung wirkende Kraft auf die Zwischenwelle 24 ausgeübt werden kann.

Die axiale Kraft bzw. die axiale Verschiebung der Zwischenwelle 24 überträgt sich durch die gegenläufigen Schrägverzahnungen von den Zwischenzahnrädern 26 und 28 jeweils auf die zugeordneten Ritzel 34 und 36. Die dabei durch die axiale Verschiebung der Zwischenwelle 24 hervorgerufene Wirkung läßt sich anhand von Fig. 2 und 3 verdeutlichen.

Fig. 2 zeigt die beiden Ritzel 34, 36 des ersten Ritzelpaares, die auf den Ausgangswellen 32 angeordnet sind, und von denen das eine Ritzel 34 mit dem Zwischenzahnrad 26 und das andere Ritzel 36 mit dem Zwischenzahnrad 28 auf der Zwischenwelle 24 im Eingriff ist. Die Drehrichtung der beiden gegenläufig schrägverzahnten Ritzel 34 und 36 sind durch die Pfeile C angedeutet.

Fig. 3 zeigt die beiden gleichverzahnten Ritzel 38, 40 des zweiten Ritzelpaares im Eingriff mit dem Zahnkranz 44, welches sich in Richtung des Pfeiles D dreht, und gestrichelt sind hier nochmals die in der Zeichenebene hinten liegenden Zwischenzahnräder 26, 28 angedeutet. Jedes einzelne Ritzel 38 und 40 treibt im Sinne einer Leistungsverzweigung den Zahnkranz 44 an.

Die axiale Verschiebung der Zwischenwelle 24 bewirkt nun eine Beeinflussung der Drehrichtungen der Ritzel 34, 36 bzw. der Ritzel 38, 40 wobei diese Beeinflussung davon herrührt, daß durch die axiale Verschiebung der Zwischenwelle 24 eine Einwirkung über die beiden Ritzel 34, 36 auf die beiden Ausgangswellen 32 und auf die beiden Ritzel 38, 40 erfolgt. Wegen der gegenläufigen Schrägverzahnung der beiden Ritzel 34, 36 sind diese Einwirkungen auch entgegengesetzt.

In Fig. 2 und in Fig. 3 wird der Drehbewegung des einen Ritzels 34 bzw. 38 nämlich - vergleiche den gestrichelt gezeichneten Pfeil E - entgegengewirkt, während die Drehrichtung des anderen Ritzels 36 bzw. 40 unterstützt wird (vgl. den gestrichelt gezeichneten Pfeil F).

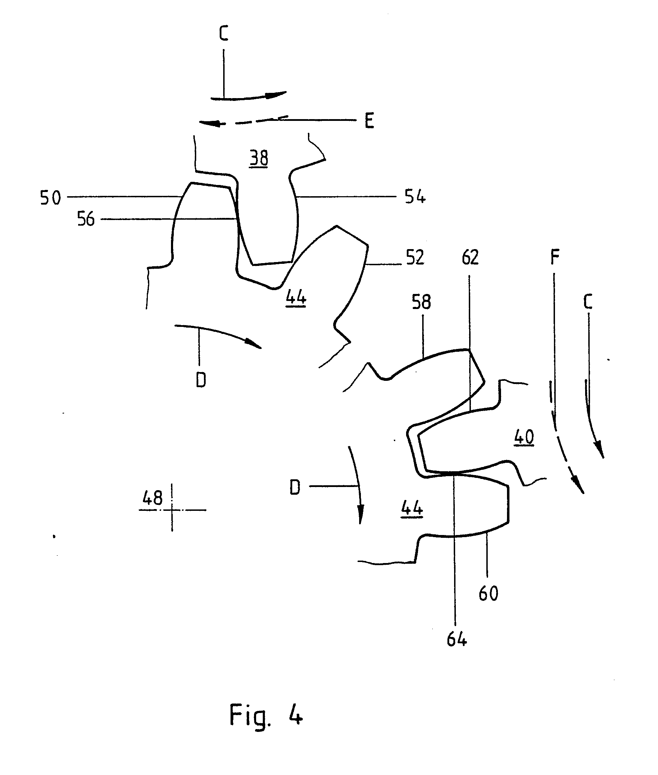

Diese unterschiedlichen Beeinflussungen der ohne die erfindungsgemäßen Maßnahmen gegebenen Drehrichtungen der Ritzelpaare 34, 36 und 38, 40 führen zu dem gewünschten spielfreien Antrieb, was nachfolgend anhand von Fig. 4 näher erläutert wird.

Die schematische Darstellung in Fig. 4 zeigt ausschnittsweise Zähne 50 und 52 im Eingriff mit einem Zahn 54 des Ritzels 38, und ferner sind weitere Zähne 58, 60 des Zahnkranzes 44 im Eingriff mit einem Zahn 62 des anderen Ritzels 40 dargestellt. Der Zahnkranz 44 dreht sich in Richtung des Pfeiles D um die Hauptspindelachse 48.

Die bei dem Ritzel 38 durch den gestrichelt gezeichneten Pfeil E angedeutete, der Drehrichtung gemäß dem Pfeil C entgegengerichtete Beeinflussung führt dazu, daß der Zahn 54 des Ritzels 38 und der Zahn 50 des Zahnkranzes 44 längs der Eingriffslinie 56 in fester Berührung miteinander sind und hier keine Luft vorhanden ist.

Ähnlich sind die Verhältnisse bei dem anderen Ritzel 40. Hier wird die Bewegungsrichtung gemäß dem Pfeil C allerdings zusätzlich unterstützt, was durch den gestrichelt gezeichneten Pfeil F angedeutet ist. Als Folge davon sind der Zahn 62 des Ritzels 40 und der Zahn 60 des Zahnkranzes 44 längs der Eingriffslinie 64 in fester Berührung miteinander, so daß auch hier keine Luft zwischen den Zähnen gegeben ist.

Insgesamt wird also durch die axiale Verschiebung der Zwischenwelle 24 dafür Sorge getragen, daß die betreffenden Zähne längs ihrer Flanken jeweils immer unter Berührung abkämmen, d.h. es tritt kein Spiel zwischen den einzelnen Ritzeln und dem Zahnkranz auf und der Positionierbetrieb kann spielfrei erfolgen.

Durch die Größe der axialen Verschiebung B der Zwischenwelle 24 bzw. durch die dafür mittels der Hydraulikvorrichtung 42 aufgewendeten Kraft läßt sich eine gewünschte Anpassung an unterschiedliche Betriebsbedingungen vornehmen.

## Ansprüche

1. Spindelkasten für eine Drehmaschine, mit einem Zahnradgetriebe, welches mindestens eine antreibbare Eingangswelle und zur Leistungsverzweigung zwei Ausgangswellen für den Antrieb einer mit einem Zahnkranz versehenen Planscheibe umfaßt, wobei die beiden Ausgangswellen ein erstes mit Zwischenzahnrädern einer Zwischenwelle im Angriff befindliches Ritzelpaar zum Antrieb der Ausgangswellen und ein zweites im Eingriff mit dem Zahnkranz der Planscheibe befindliches Ritzelpaar besitzen, dadurch gekennzeichnet, daß die beiden Ritzel des ersten Ritzelpaares (34, 36) in an sich bekannter Weise gegenläufig schrägverzahnt sind, bei ebenfalls gegenläu figer Schrägverzahnung der im Eingriff befindlichen Zwischenzahnräder (26, 28), und daß die die Zwischenzahnräder (26, 28) tragende Zwischenwelle (24) wahlweise axial verschiebbar (B) ist.

2. Spindelkasten nach Anspruch 1, dadurch gekennzeichnet, daß die Zwischenwelle (24) mit einer Hydraulikvorrichtung (42) zum wahlweisen axialen Verschieben der Zwischenwelle (24) verbunden ist.

3. Spindelkasten nach Anspruch 1 und/oder 2, dadurch gekennzeichnet, daß die Zwischenwelle (24) unter ständiger Einwirkung einer wählbaren in axialer Richtung wirkenden Kraft haltbar ist.

4. Spindelkasten nach einem der vorhergehenden Ansprüche 1 - 3, dadurch gekennzeichnet, daß die Eingangswelle (12) einen mehrere Zahnräder umfassenden Schaltradsatz (14) besitzt.

5. Spindelkasten nach einem der vorhergehenden Ansprüche 1 - 4, dadurch gekennzeichnet, daß zwischen der Eingangswelle (12) und der Zwischenwelle (24) eine Übersetzungswelle (16) mit mehreren Zahnrädern (18, 20, 22) angeordnet ist.

6. Spindelkasten nach einem der vorhergehenden Ansprüche 1 - 5, dadurch gekennzeichnet, daß die Zwischenwelle (24) neben den das erste Ritzelpaar (34, 36) antreibenden Zwischenzahnrädern (26, 28) ein weiteres Zahnrad (30) trägt, welches von einem Zahnrad (20) der Übersetzungswelle (16) angetrieben wird.

7. Spindelkasten nach einem der vorhergehenden Ansprüche 1 - 6, dadurch gekennzeichnet, daß die beiden Ritzel des zweiten Ritzelpaares (38, 40) gleichverzahnt sind.

8. Spindelkasten nach Anspruch 7, dadurch gekennzeichnet, daß die beiden Ritzel des zweiten Ritzelpaars(38, 40) und der Zahnkranz (44) - schrägverzahnt sind.

9. Spindelkasten nach Anspruch 7, dadurch gekennzeichnet, daß die beiden Ritzel des zweiten Ritzelpaars (38, 40) und der Zahnkranz (44) gradverzahnt sind.

Fig. 1

Fig. 2

Fig. 3

C

E

38

50

56

54

52

44

58

62

F

D

C

48

D

40

44

60

64

Fig. 4